(19) Europäisches Patentamt
European Patent Office
Office européen des brevets

(11) **EP 1 492 999 B1**

(12) **EUROPEAN PATENT SPECIFICATION**

(45) Date of publication and mention
of the grant of the patent:
**16.01.2013  Bulletin 2013/03**

(21) Application number: **03712453.4**

(22) Date of filing: **07.04.2003**

(51) Int Cl.:
*G01C 21/26* (2006.01)          *G01C 1/00* (2006.01)

(86) International application number:
**PCT/GB2003/001519**

(87) International publication number:
**WO 2003/087724 (23.10.2003 Gazette 2003/43)**

(54) **IMPROVEMENTS RELATING TO CAMERAS**

VERBESSERUNGEN AN KAMERAS

AMELIORATIONS APPORTEES AUX CAMERAS

(84) Designated Contracting States:
**DE ES FR GB IT**

(30) Priority:  **10.04.2002  GB 0208217**

(43) Date of publication of application:
**05.01.2005  Bulletin 2005/01**

(73) Proprietor: **TRW Limited
Solihull, West Midlands B90 4AX (GB)**

(72) Inventor: **OYAIDE, Andrew, Oghenovo
Haymills, Birmingham B10 9JB (GB)**

(74) Representative: **Tranter, Andrew David
Barker Brettell LLP
100 Hagley Road
Edgbaston
Birmingham
West Midlands B16 8QQ (GB)**

(56) References cited:
**EP-A- 0 952 427     WO-A-01/65274
US-A- 5 835 880**

**Description**

This invention relates to improvements relating to cameras. In particular, it relates to methods of estimating the heading angle of a camera system associated with a vehicle, a method of improving the accuracy of such a camera system and apparatus for performing the methods.

It is known to provide camera systems for vehicles, which capture images of objects and features on the road. A processor may then determine the position of the objects in the image relative to the vehicle. Typically, vehicle-based camera systems are used for lane or vehicle detection. It is known that, to function correctly, the alignment of the camera relative to the vehicle must be known. For an example, for a forward facing camera, an error of 0.6° in the camera yaw will lead to an error of 1 metre in the calculation of the lateral position of an object visible in the image at 100 metres distance from the vehicle. Even with careful alignment and positioning of the camera, it is still possible for a small error to exist. The camera may also become misaligned over time during use of the vehicle.

We are aware of European Patent Application publication number EP 0 952 427, which discloses a guidance system for a mine surveying vehicle, which uses images captured from a camera to determine the vehicle's position in a mine. We are also aware of United States Patent number 5 835 880, which discloses an automatic vehicle following apparatus, which uses images captured by a following vehicle to determined the heading angle of a followed vehicle, which has been used to characterise claims 1 and 19. Finally, we are aware of an article entitled "AURORA: A Vision-Based Roadway Departure Warning System" (Intelligent Robots and Systems 95, IEEE, Volume 1, 5-9, August 1995, pages 245 to 248), which discloses a system whereby the lateral speed of a vehicle can be determined from images captured by a camera on the vehicle. It has been used to characterise claim 32.

According to a first aspect of the invention, there is provided a method of calculating the heading angle of a vehicle using a camera associated with the vehicle, the method comprising capturing at least two images with the camera, calculating the lateral speed of the vehicle from the images, calculating the ground speed of the vehicle and calculating, from the ground speed and the lateral speed, a first heading angle of the vehicle.

By lateral speed, we mean the component of the velocity with which the vehicle is moving in a direction perpendicular to that in which the camera is pointing, and by ground speed, we mean the speed at which the vehicle is moving along its direction of travel.

Using the ground speed of the vehicle introduces a measurement independent of the positioning of the camera.

The method may further comprise the step of calculating a second heading angle from the images. This may then be compared to the first heading angle. In a preferred embodiment, the comparison may produce a misalignment value indicative of the angular offset of the camera from some datum. The datum may be indicative of some "ideal" alignment. The comparison may involve taking the difference between the first and second heading angles. The datum may be the forwards-backwards centre-line of the vehicle.

This, advantageously, provides a method for improving the accuracy of the measurement of the heading angle, whilst also providing a measurement of the possible misalignment of the camera.

The method may include the step of analysing the images in order to calculate heading angles by finding features that follow the direction of travel of the vehicle. Such features could include the edges of a road or lane markings on the road. The features may then be fitted to a curve. The curve may be a quadratic equation. The quadratic equation may have the form:

$$x = c_1 + c_2 z + c_3 z^2$$

where $z$ is the distance from the camera in the direction in which the camera is pointing and $x$ the distance from the camera in the perpendicular direction. $c_1$ may give the offset of the feature from the position of the camera; $c_2$ may give the angle (in radians) between the direction in which the feature heads and the line of view of the camera; and $c_3$ may give the reciprocal of twice the radius of curvature of the feature.

The first heading angle may be calculated by calculating the angle between the direction of the lateral velocity and that in which the vehicle is moving. As the lateral velocity is a component of the ground velocity, it is possible to construct a right-angled triangle with the ground velocity as the hypotenuse; the heading angle may be calculated as the angle opposite the sides corresponding to the ground and lateral velocities.

The lateral velocity may be calculated by measuring the rate at which the features move perpendicular to the direction of view of the camera. This may be calculated as the rate of change of $c_1$. This calculation may be averaged over more than one feature. The ground velocity may be obtained from a speedometer associated with the vehicle.

The first heading angle may be calculated by taking the inverse cosine of the ratio of the lateral velocity to the speed of the vehicle, then taking the resultant angle away from 90°. Equivalently, the first heading angle may be calculated by taking the inverse sine of the ratio of the lateral velocity to the speed of the vehicle.

The second heading angle may be calculating from analysing features of the image. It may be calculated as $c_2$ in the equation. This may be performed as an average over more than one feature.

The second heading angle may be calculated without reference to the ground speed. Indeed, the second heading angle may be calculated from features of the image only.

An inverse perspective transform may be performed on the image viewed by the camera before the features are fitted to curves. This may be given as

$$ x = \frac{hX}{H-Y} \quad \text{and} \quad z = \frac{fh}{H-Y} $$

where X and Y are the image co-ordinates referenced from the centre of the line of the captured image, H is indicative of the position of the horizon, f is the focal length of the camera, h is the height of the camera above the ground, z is the distance from the camera in the direction in which the camera is pointing and x the distance from the camera in the perpendicular direction.

This has the advantage that this uses a value already calculated in the fitting of the features to the curve. Furthermore, as the rate of change of $c_1$ will be less affected by misalignment in the camera than the heading angle calculated as $c_2$, a more accurate measurement of the heading angle is possible.

Images may be captured continually, or periodically. Images may be captured at a rate of 50, 25, 10, 5 or 1 per second, or every second or 2, 5 or 10 seconds. Correspondingly, heading angles may recalculated with every image captured, or only once for a certain number of captured images. Heading angles may be recalculated every image, or every 2, 3, 4, 5, 10, 20, 50 or 100 images.

According to a second aspect of the invention, there is provided a method of improving the accuracy of a camera system associated with a vehicle, the method comprising calculating the misalignment value according to the method of the first aspect of the invention and using this value to correct the system.

The method may further comprise repeating the method of the first aspect, with the heading angle value being first corrected by the amount indicated by the misalignment value. This can then be iteratively repeated. The method may be repeated periodically or until a desired level of accuracy is reached.

The misalignment value calculated by successive operations of this method may be filtered by a filter such that the rate of change of the misalignment is constrained to be below a maximum value. The filter may be a low pass filter and may have a time constant of substantially 3.5 seconds. This prevents noise from unduly affecting operation of a camera system, as it is unlikely that the misalignment of a camera will change at a high frequency.

The method may further comprise the step of alerting a user should the misalignment value exceed certain bounds. It may also include the step of alerting a user should the misalignment value change at a rate greater than a predefined limit. This will give the user an indication should there be a fault in the camera system.

According to a third aspect of the invention, there is provided a method of estimating the error in a measured heading angle of a vehicle travelling along a road, the road having features aligned along the length of the road, comprising the steps of:

a) Periodically capturing images of the road;
b) Analysing the or each image to determine the position of the features;
c) Fitting the features to a curve;
d) Calculating a lateral velocity of the curve relative to the vehicle;
e) Dividing the lateral velocity by the ground speed of the vehicle;
f) Taking the inverse cosine of this ratio; and
g) Taking this angle away from 90° to give a first heading angle.

These steps advantageously give a more accurate measurement of heading angle than is possible from measuring the heading angle from images alone.

The step of analysing the features may include performing a inverse perspective transform. The transform may be of the form

$$ x = \frac{hX}{H-Y} \quad \text{and} \quad z = \frac{fh}{H-Y} $$

where X and Y are the image co-ordinates referenced from the centre of the line of the captured image, H is indicative of the position of the horizon, f is the focal length of the camera, h is the height of the camera above the ground, z is the distance from the camera in the direction in which the camera is pointing and x the distance from the camera in the perpendicular direction.

The curve to which the features are fitted in step (c) may be a quadratic equation. It may be of the form $x = c_1 + c_2z + c_3z^2$ where x and z are as described above. The goodness of fit to this curve may be used to give a level of confidence of the fit. The lateral velocity may then be calculated as the rate of change of $c_1$. This may be averaged over more than one feature. The second heading angle may be calculated (in radians) as $c_2$. Again, this may be averaged over more than one feature. Either of the averages may be over the curves corresponding to the lane markings to either side of the vehicle.

Preferably, the method also includes the steps of:

h) Calculating a second heading angle from the curve to which the features have been fitted; and

i) Calculating the difference between the first and second heading angles to give a misalignment value indicative of the misalignment between the camera and some datum.

This provides a value that can then be used to correct other measurements using the camera. Indeed, the method may also include the step of:

j) Repeating the method, correcting the image viewed by the camera by an amount indicated by the misalignment value.

This may be repeated iteratively to improve the accuracy of measurements using the camera. The process may be repeated until the measurement of heading angle meets a desired accuracy.

The misalignment value from successive iterations of the method may be filtered such that it may only change at less than a certain rate. The filter may be a low pass filter, and it may have a time constant of substantially 3.5 seconds.

The method may only be carried out when the ground speed of the vehicle is above a certain limit. It may only be carried out when the level of confidence of the fit of the features to the curve is above a certain level.

Alternatively, the misalignment value might only be updated when the system is first associated with the vehicle, or when the vehicle is at a service station.

In a further alternative, the misalignment value may be used as an angle through which the camera should be physically moved in order to improve its alignment.

According to a fourth aspect of the invention, there is provided a camera system adapted to be fitted to a vehicle, the camera system comprising at least one camera and being adapted to correct for errors in alignment when fitted to a vehicle using the method of the first, second or third aspects. The system may include a fault indicating means, which is adapted to alert a user should the misalignment value exceed certain bounds or change at a rate that exceeds certain bounds.

The camera system may include a control means adapted to capture multiple images from the or each camera, calculate from the images the position of features on the road, and calculate heading angles from the positions of the features and the speed at which the vehicle is travelling. The speed of the vehicle may be sensed by means of a speed sensing means associated with the control means.

The control means may also be provided with a memory adapted to store the misalignment values. The memory may be of the form of flash RAM.

The memory may also be adapted to store a program used to perform the method. The control means may also comprise a processor adapted to perform the calculations involved with the method. The processor may do this by running a program stored in the memory.

According to a fifth aspect of the invention, there is provided a data carrier carrying software which, when running on a processor, causes the processor to perform the method of the first, second or third aspects.

The invention will now be described by way of example only, with reference to the accompanying drawings, in which:-

**Figure 1** is a schematic depiction of a car fitted with a camera system according to this invention;

**Figure 2** is a diagram showing the geometry of the system; and

**Figure 3** is a flow chart showing the steps involved in the method of this invention.

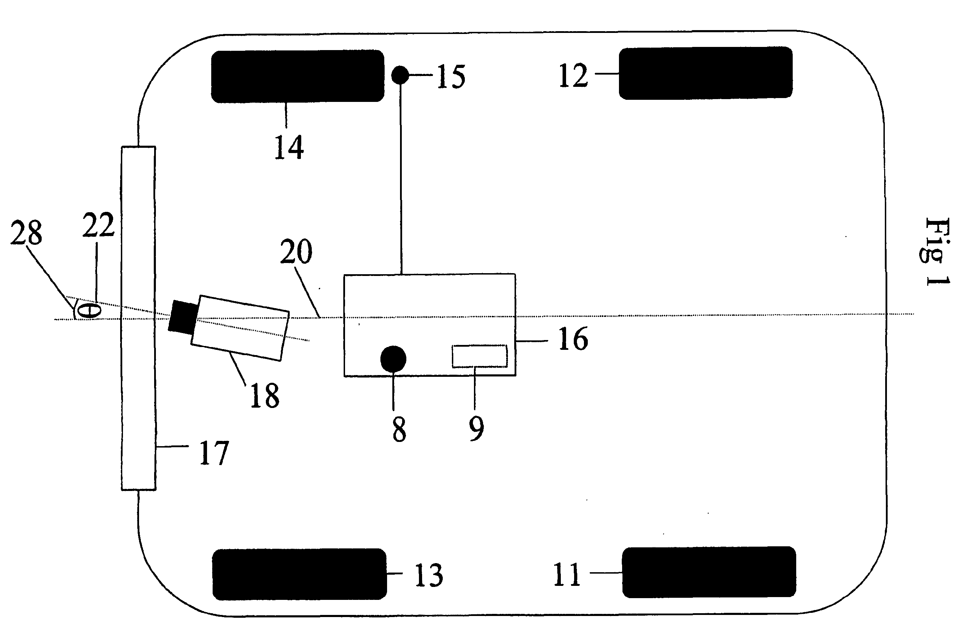

A car 10 fitted with the camera system of the present invention is shown in Figure 1. The car 10 could equally well be a van, lorry, motorcycle or any other vehicle adapted to travel along a road. A video camera 18 is mounted towards the front of the interior of the vehicle and views the scene visible through a windscreen 17. Ideally, the camera 18 would be mounted such that it captures images of the scene in front of the car 10 which are centred on and aligned with the centre line 20 of the car 10. However, this is difficult to achieve precisely and so in a practical system, as shown in Figure 1 of the accompanying drawings, the view from the camera is more likely to be centred along camera view line 22, which is at an angle $\theta$ 28 to the car centre line 20. Also provided is a road wheel speed sensing means 15 that measures the speed at which the road wheels 11, 12, 13, 14 are moving. This could be of the type commonly used in vehicle speedometers. Control means 16, for example a processor such as an ECU, is associated with the camera 18 and the road wheel speed sensing means 15. The control means 16 is supplied with memory means 9 in which the algorithm for calculating the vehicle's lane position is stored together with any variables necessary for calculating such. The control means 16 is also supplied with alert means 8, in this case a light on the car's 10 dashboard, for alerting a user to a fault in the system.

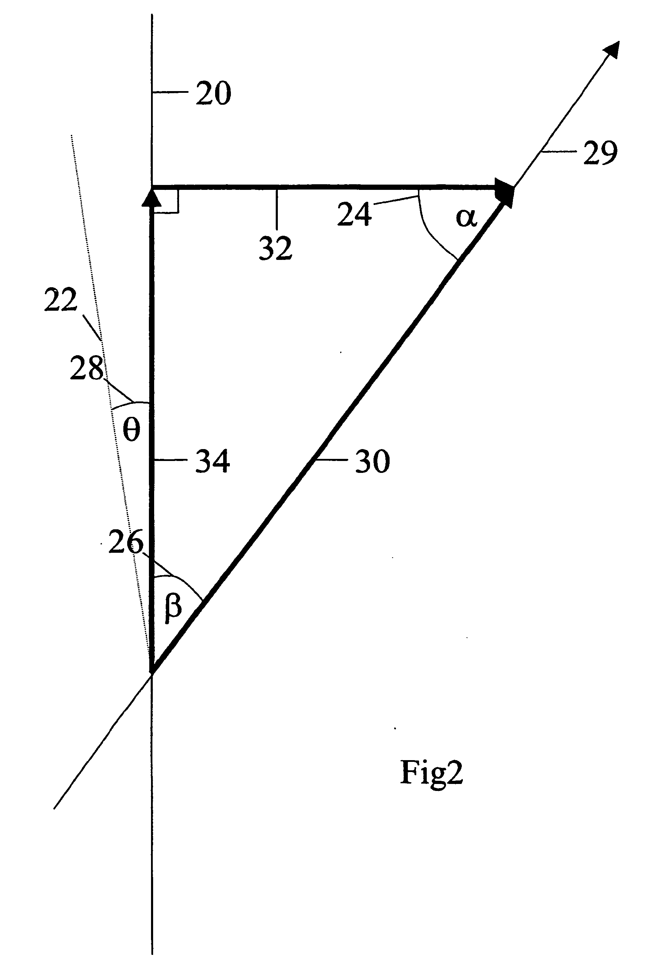

Figure 2 shows the angles and directions referred to in this description. The direction of travel 29 of the car 10 is at a heading angle $\beta$ 26 from the centre line of the car 10. The speed measured by the road wheel speed sensing means 15 is depicted as a velocity $v_{wheels}$ 30. This is shown decomposed into two components: a longitudinal component $v_{long}$ 34 along the centre line 20 and a lateral component $v_{lat}$ 32 perpendicular to the centre line 20. These three velocities form a right-angled triangle with interior angles $\alpha$ 24 and $\beta$ 26, with $\alpha = 90 - \beta$.

The control means 16 periodically captures images from the video camera 18. It then applies an edge detection algorithm to the captured images in order to calculate the location of the edges of the road, lane markings and other features that follow the direction of travel of the road (hereinafter "edges"). It then applies an inverse perspective transform to translate the points relating to the respective edges from the image plane into the real world plane. The transform is given by:

$$x = \frac{hX}{H-Y} \quad \text{and} \quad z = \frac{fh}{H-Y} \quad\quad (1)$$

where X and Y are the image co-ordinates referenced from the centre of the line of the captured image, H is the horizon, f is the focal length of the camera 18, h is the height of the camera above the ground. The x co-ordinate gives the lateral distance perpendicular to the view line 28 of the camera 18, whilst the z co-ordinate gives the distance in the real world in the direction away from the car 10 perpendicular to the view line 28.

A tracking algorithm, which uses an adapted recursive least-squares technique in the estimation of the lane model parameters, fits the transformed edges to a quadratic equation in real space:

$$x = c_1 + c_2 z + c_3 z^2 \quad\quad (2)$$

where x and z are as previously described; $c_1$ is the edge offset, which gives a lateral distance $d_{lat}$ from the relevant edge to the view line 22; $c_2$ is the first, measured, heading angle $\beta$ 26 (in radians); and $c_3$ is the reciprocal of twice the radius of curvature of the lane. The goodness of fit of the transformed edge points to equation (2) can be used to give a level of confidence in the fit.

The lateral velocity of the vehicle can then be calculated by calculating the rate of change of lane offsets with respect to time, taking an average position of, say, the two lane markings on either side of the car 10. This could be expressed as:

$$v_{lat} = \frac{c_1' - c_1}{\Delta t} \quad\quad (3).$$

with $c_1'$ and $c_1$ being the average lane offset at two different times and $\Delta t$ being the time interval between those times.

However, there are likely to be errors in these coefficients due to misalignment of the camera 18. If the camera is mispositioned by an angle $\theta$ 28 in a direction opposite to that in which the heading angle $\beta$ 26 is measured (as shown in figure 2) then the lane detection algorithm will overestimate the heading angle by $\theta$ (that is the measured heading angle will be $\theta + \beta$). The lane offsets, and hence lateral velocity $v_{lat}$ will, on the other hand, be overestimated by a smaller amount. Accordingly, the lateral velocity $v_{lat}$ is more accurately measurable than the heading angle.

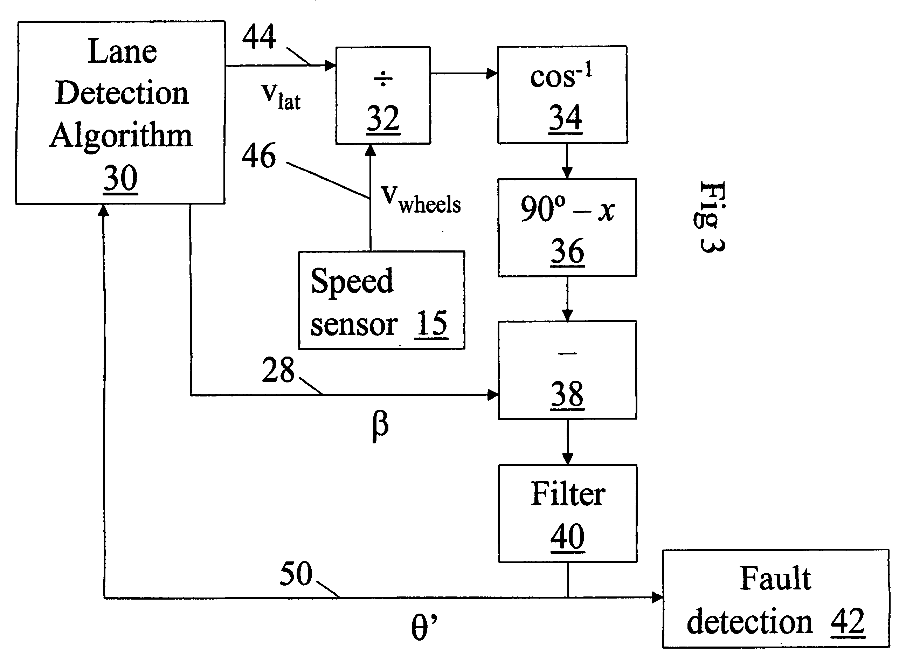

Accordingly, $v_{lat}$ can be used to estimate the error in the offsets. Figure 3 shows the method for carried out by the control means 16 in order to do this. Initially, the algorithm 30 described above calculates values for lateral velocity $v_{lat}$ 44 and heading angle $\beta$ 28. The lateral velocity $v_{lat}$ is divided 32 by the wheel speed $v_{wheels}$ measured by the road wheel speed sensor 15. The inverse cosine 34 is taken of this ratio and the resultant angle taken away from 90° 36. This gives a second heading angle that is a more accurate indication of the actual heading angle than is obtainable from the algorithm described above. The measured heading angle 28 is then taken away from the more accurate value to give an estimate of the misalignment angle. This value is then filtered through a very low pass filter with a time constant in the region of 3.5 seconds (tuneable to compensate for the level of noise in the circuit) to remove any spurious vibrations, as it is not envisaged that the misalignment angle will vary quickly. The filtered misalignment angle 50 can then be used as an estimate $\theta'$ of the actual misalignment angle $\theta$ 28. This filtered value 50 can then be fed back into the lane detection algorithm as a decrement to be taken away from the measured heading angle.

The process can be repeated with the next set of measurements in an iterative manner in order to gradually decrease the errors introduced by the misalignment. The error correction algorithm is only updated when: the measured road wheel 11, 12, 13, 14 speed is above a certain limit; the lane detection algorithm indicates that the confidence with which it has measured the position of the lanes is above a certain limit; and that the measured heading angle and filtered misalignment error are within certain tolerances.

In one embodiment, it is envisaged that the process could be performed periodically with every image captured by the camera 18 or less frequently, say once every few minutes. Alternatively, the misalignment angle might only be updated when the system is first fitted to the car 10 and then when the car 10 is returned to a service station, when the memory 9 holding the filtered misalignment angle 50 can be updated. In a further alternative, the misalignment value could be used as an angle by which the positioning of the camera should be adjusted in order for it to be properly aligned.

The error correction algorithm is also provided with a fault detection subroutine 42 that signals the user of the car 10 should a fault occur with the system using the alert means 8. Examples of the criteria that this subroutine could use include the speed at which the misalignment angle changes, or the magnitude of the misalignment. If any of these depart from predetermined ranges then an alert is signalled. The fault detection subroutine 42 may also be used to calculate, at the point of manufacture, whether the system has been assembled within tolerances.

## Claims

1. A method of calculating the heading angle of a vehicle using a camera (18) associated with the vehicle, the method comprising capturing at least two images with the camera (18), and **characterised by** calculating the lateral speed (32) of the vehicle from the images, and calculating the ground speed (30) of the vehicle and calculating, from the ground speed (30) and the lateral speed (32), a first heading angle (26) of the vehicle.

2. The method of claim 1, further comprising the step of calculating a second heading angle from the images.

3. The method of claim 2 in which the second heading angle is compared to the first heading angle (26) to produce a misalignment (28) value indicative of the angular offset of the camera (18) from a datum (20).

4. The method of claim 2 or claim 3 in which the second heading angle is calculated without reference to the ground speed (30).

5. The method of claim 4 in which the second heading angle is calculated from features of the images only.

6. The method of any preceding claim in which the first heading angle (26) is calculated by calculating the angle between the direction of the lateral velocity (32) and that in which the vehicle is moving (29).

7. The method of claim 6 in which the first heading angle (26) is calculated by decomposing the ground velocity (30) into two perpendicular components to form a right-angled triangle, one of the components being the lateral velocity (32), the first heading angle (26) being the angle in the triangle opposite the lateral velocity (32).

8. The method of any preceding claim, further including the step of analysing the images in order to calculate heading angles by finding features that follow the direction of travel of the vehicle.

9. The method of claim 8 in which the lateral velocity (32) is calculated by measuring the rate at which the features move perpendicular to the direction of view (22) of the camera (18).

**10.** The method of claim 8 or claim 9 in which the features are fitted to a curve of the form:

$$x = c_1 + c_2 z + c_3 z^2$$

where $z$ is the distance from the camera (18) in the direction in which the camera is pointing (22), x the distance from the camera (18) in the perpendicular direction, and $c_1$, $c_2$ and $c_3$ are coefficients to be determined.

**11.** The method of claim 10 in which the lateral velocity (32) is calculated as the rate of change of $c_1$.

**12.** The method of claim 10 or claim 11 in which the second heading angle is calculated as $c_2$.

**13.** The method of any one of claims 4 to 8 further comprising the step of performing an inverse perspective transform on the image viewed by the camera (18) before the features are fitted to curves, the transform being given by:

$$x = \frac{hX}{H - Y} \quad \text{and} \quad z = \frac{fh}{H - Y}$$

where X and Y are the image co-ordinates referenced from the centre of the line of the captured image, H is indicative of the position of the horizon, f is the focal length of the camera (18), h is the height of the camera (18) above the ground, z is the distance from the camera (18) in the direction (22) in which the camera (18) is pointing and x the distance from the camera (18) in the perpendicular direction.

**14.** A method of improving the accuracy of a camera system associated with a vehicle, the method comprising calculating a misalignment value (28) according to claim 3 or any one of claims 4 to 13 when dependent on claim 3 and using this value to correct the system.

**15.** The method of claim 14 further comprising repeatedly recalculating the misalignment value (28), with the first heading angle (26) being first corrected by the amount indicated by the misalignment value (28) with each successive recalculation.

**16.** The method of claim 15 in which the misalignment value (28) calculated by each successive iteration is filtered by a filter (40) such that the rate of change of the misalignment value (28) is constrained to be below a maximum value.

**17.** The method of any one of claims 14 to 16 further comprising the step of alerting a user should the misalignment value (28) exceed certain bounds.

**18.** The method of any one of claims 14 to 17 further comprising the step of alerting a user should the misalignment value (28) change at a rate greater than a predefined limit.

**19.** A method of estimating the error in a measured heading angle (26) of a vehicle travelling along a road, the road having features aligned along the length of the road, comprising the steps of:

a) Periodically capturing images of the road;
and **characterised by**:
b) Analysing the or each image to determine the position of the features;
c) Fitting the features to a curve;
d) Calculating a lateral velocity (32) of the curve relative to the vehicle;
e) Dividing the lateral velocity (32) by the ground speed (30) of the vehicle;
f) Taking the inverse cosine of this ratio; and
g) Taking this angle away from 90° to give a first heading angle.

**20.** The method of claim 19 in which the step of analysing the features includes performing an inverse perspective transform.

**21.** The method of claim 20 in which the transform is of the form:

$$x = \frac{hX}{H - Y} \quad \text{and} \quad z = \frac{fh}{H - Y}$$

where X and Y are the image co-ordinates referenced from the centre of the line of the captured image, H is indicative of the position of the horizon, f is the focal length of a camera (18) which captured the images, h is the height of the camera (18) above the ground, z is the distance from the camera (18) in the direction (22) in which the camera (18) is pointing and x the distance from the camera (18) in the perpendicular direction.

**22.** The method of any one of claims 19 to 21 in which the curve to which the features are fitted in step (c) is a quadratic equation of the form $x = c_1 + c_2 z + c_3 z^2$ where $z$ is the distance from a camera (18) which captured the images in the direction (22) in which the camera (18) is pointing, x the distance from the camera (18) in the perpendicular direction, and $c_1$, $c_2$ and $c_3$ are coefficients to be determined.

**23.** The method of claim 22 in which the goodness of fit to this curve is used to give a level of confidence of the fit.

**24.** The method of claim 22 or claim 23 in which the lateral velocity (32) is calculated as the rate of change of $c_1$.

**25.** The method of any one of claims 22 to 24 in which the second heading angle is calculated as $c_2$ in radians.

**26.** The method of any one of claims 19 to 25 in which the method also includes the steps of:

h) Calculating a second heading angle from the curve to which the features have been fitted; and
i) Calculating the difference between the first and second heading angles to give a misalignment value (28) indicative of the misalignment between a camera (18) used to capture the images and a datum (20).

**27.** The method of claim 26, further comprising:

j) Repeating the method, correcting the image viewed by the camera (18) by an amount indicated by the misalignment value (28).

**28.** The method of claim 27 in which step (j) is repeated iteratively to improve the accuracy of measurements using the camera.

**29.** The method of claims 27 or 28 in which step (j) is only carried out when the ground speed (30) of the vehicle is above a certain limit.

**30.** The method of any one of claims 27 to 29 in which step (j) is only carried out when the level of confidence of the fit of the features to the curve is above a certain level.

**31.** The method of any one of claims 26 to 31 in which the misalignment value is used as an angle through which the camera should be physically moved in order to improve its alignment.

**32.** A camera system adapted to be fitted to a vehicle, the camera system comprising at least one camera and means for:

• capturing at least two images with the camera (18), and
• calculating the lateral speed (32) of the vehicle from the images, and **characterised by** further comprising means for:
• calculating the ground speed (30) of the vehicle,
• calculating, from the ground speed (30) and the lateral speed (32), a first heading angle (26) of the vehicle, and
• comparing the second heading angle to the first heading angle (26) to produce a misalignment (28) value indicative of the angular offset of the camera (18) from a datum (20), so as to correct for errors in alignment when fitted to a vehicle.

**33.** A camera system according to claim 32 in which the system includes a fault indicating means (42), which is adapted to alert a user should a misalignment value (28) of the camera (18) exceed certain bounds or change at a rate that exceeds certain bounds.

34. A camera system according to claim 32 or claim 33, further including a control means adapted to capture multiple images from the or each camera (18), calculate from the images the position of features on the road, and calculate heading angles (26) from the positions of the features and the speed (30) at which the vehicle is travelling.

35. A camera system according to claim 34 comprising a speed sensing means (15) associated with the control means arranged to sense the speed (30) of the vehicle.

36. A camera system according to claim 34 or claim 35 in which the control means is also provided with a memory adapted to store the misalignment values.

37. A data carrier carrying software which, when running on a processor, causes the processor to perform the method of any one of claims 1 to 31.

**Patentansprüche**

1. Verfahren zum Berechnen des Gierwinkels eines Fahrzeugs unter Verwendung einer dem Fahrzeug zugehörigen Kamera (18), wobei das Verfahren das Aufnehmen von zumindest zwei Bildern mit der Kamera (18) umfasst und **gekennzeichnet ist durch** ein Berechnen der Quergeschwindigkeit (32) des Fahrzeugs anhand der Bilder, ein Berechnen der Grundgeschwindigkeit (30) des Fahrzeugs und ein Berechnen eines ersten Gierwinkels (26) des Fahrzeugs aus der Grundgeschwindigkeit (30) und der Quergeschwindigkeit (32).

2. Verfahren nach Anspruch 1, ferner umfassend den Schritt des Berechnens eines zweiten Gierwinkels anhand der Bilder.

3. Verfahren nach Anspruch 2, in dem der zweite Gierwinkel mit dem ersten Gierwinkel (26) verglichen wird, um einen Fehlausrichtungswert (28) zu erzeugen, der auf den Winkelversatz der Kamera (18) von einem Festpunkt (20) schließen lässt.

4. Verfahren nach Anspruch 2 oder 3, in dem der zweite Gierwinkel ohne Bezug auf die Grundgeschwindigkeit (30) berechnet wird.

5. Verfahren nach Anspruch 4, in dem der zweite Gierwinkel nur anhand von Merkmalen der Bilder berechnet wird.

6. Verfahren nach einem vorhergehenden Anspruch, in dem der erste Gierwinkel (26) berechnet wird durch Berechnen des Winkels zwischen der Richtung der Quergeschwindigkeit (32) und derjenigen, in die sich das Fahrzeug bewegt (29).

7. Verfahren nach Anspruch 6, in dem der erste Gierwinkel (26) berechnet wird durch Zerlegen der Grundgeschwindigkeit (30) in zwei senkrechte Komponenten, um ein rechtwinkliges Dreieck zu bilden, wobei eine der Komponenten die Quergeschwindigkeit (32) ist und der erste Gierwinkel (26) der in dem Dreieck der Quergeschwindigkeit (32) gegenüberliegende Winkel ist.

8. Verfahren nach einem vorhergehenden Anspruch, ferner umfassend den Schritt des Analysierens der Bilder, um Gierwinkel durch Finden von Merkmalen zu berechnen, die der Fahrtrichtung des Fahrzeugs folgen.

9. Verfahren nach Anspruch 8, in dem die Quergeschwindigkeit (32) berechnet wird durch Messen der Geschwindigkeit, mit der sich die Merkmale senkrecht zu der Blickrichtung (22) der Kamera (18) bewegen.

10. Verfahren nach Anspruch 8 oder 9, in dem die Merkmale angepasst werden an eine Kurve der Form:

$$x = c_1 + c_2 z + c_3 z^2,$$

wobei z der Abstand von der Kamera (18) in der Richtung ist, in die die Kamera zeigt (22), x der Abstand von der Kamera (18) in der senkrechten Richtung ist und $c_1$, $c_2$ und $c_3$ zu bestimmende Koeffizienten sind.

11. Verfahren nach Anspruch 10, in dem die Quergeschwindigkeit (32) als die Änderungsgeschwindigkeit von $c_1$ berechnet wird.

12. Verfahren nach Anspruch 10 oder 11, in dem der zweite Gierwinkel als $c_2$ berechnet wird.

13. Verfahren nach einem der Ansprüche 4 bis 8, ferner umfassend den Schritt des Durchführens einer inversen perspektivischen Transformation des von der Kamera (18) betrachteten Bilds bevor die Merkmale an Kurven angepasst werden, wobei die Transformation angegeben ist durch:

$$x = \frac{hX}{H-Y} \quad \text{und} \quad z = \frac{fh}{H-Y} \; ,$$

wobei X und Y die Bildkoordinaten ausgehend von dem Zentrum der Linie des aufgenommenen Bildes sind, H indikativ für die Position des Horizonts ist, f die Brennweite der Kamera (18) ist, h die Höhe der Kamera (18) über dem Boden ist, z der Abstand von der Kamera (18) in der Richtung (22) ist, in die die Kamera (18) zeigt, und x der Abstand von der Kamera (18) in der senkrechten Richtung ist.

14. Verfahren zum Verbessern der Genauigkeit eines einem Fahrzeug zugehörigen Kamerasystems, wobei das Verfahren ein Berechnen eines Fehlausrichtungswerts (28) gemäß Anspruch 3 oder einem der Ansprüche 4 bis 13 in ihrer Abhängigkeit vom Anspruch 3 und ein Verwenden dieses Werts zum Korrigieren des Systems umfasst.

15. Verfahren nach Anspruch 14, ferner umfassend ein wiederholtes Neuberechnen des Fehlausrichtungswerts (28), wobei der erste Gierwinkel (26) zuerst durch den Betrag korrigiert wird, der durch den Fehlausrichtungswert (28) bei jeder sukzessiven Neuberechnung angegeben wird.

16. Verfahren nach Anspruch 15, in dem der durch jede sukzessive Iteration berechnete Fehlausrichtungswert (28) durch einen Filter (40) derart gefiltert wird, dass die Änderungsgeschwindigkeit des Fehlausrichtungswerts (28) unter einem Maximalwert gehalten wird.

17. Verfahren nach einem der Ansprüche 14 bis 16, ferner umfassend den Schritt des Alarmierens eines Anwenders, falls der Fehlausrichtungswert (28) bestimmte Grenzen überschreiten sollte.

18. Verfahren nach einem der Ansprüche 14 bis 17, ferner umfassend den Schritt des Alarmierens eines Anwenders, falls der Fehlausrichtungswert (28) sich mit einer Geschwindigkeit ändern sollte, die größer ist als ein vordefinierter Grenzwert

19. Verfahren zum Abschätzen des Fehlers eines gemessenen Gierwinkels (26) eines entlang einer Straße fahrenden Fahrzeugs, wobei die Straße entlang der Länge der Straße ausgerichtete Merkmale aufweist, umfassend die Schritte:

   a) periodisches Aufnehmen von Bildern der Straße;
   und **gekennzeichnet durch**:
   b) Analysieren des oder jedes Bildes, um die Position der Merkmale zu bestimmen;
   c) Anpassen der Merkmale an eine Kurve;
   d) Berechnen einer Quergeschwindigkeit (32) der Kurve relativ zu dem Fahrzeug;
   e) Teilen der Quergeschwindigkeit (32) **durch** die Grundgeschwindigkeit (30) des Fahrzeugs;
   f) Nehmen des inversen Kosinus dieses Verhältnisses; und
   g) Abziehen dieses Winkels von 90°, um einen ersten Gierwinkel anzugeben.

20. Verfahren nach Anspruch 19, in dem der Schritt des Analysierens der Merkmale das Durchführen einer inversen perspektivischen Transformation einschließt.

21. Verfahren nach Anspruch 20, in dem die Transformation die Form hat:

$$x = \frac{hX}{H-Y} \qquad \text{und} \qquad z = \frac{fh}{H-Y} \quad ,$$

wobei X und Y die Bildkoordinaten ausgehend von dem Zentrum der Linie des aufgenommenen Bildes sind, H indikativ für die Position des Horizonts ist, f die Brennweite einer Kamera (18) ist, die die Bilder aufgenommen hat, h die Höhe der Kamera (18) über dem Boden ist, z der Abstand von der Kamera (18) in der Richtung (22) ist, in die die Kamera (18) zeigt, und x der Abstand von der Kamera (18) in der senkrechten Richtung ist.

22. Verfahren nach einem der Ansprüche 19 bis 21, in dem die Kurve, an die die Merkmale im Schritt (c) angepasst werden, eine quadratische Gleichung der Form $x = c_1 + c_2z + c_3z^2$ ist, wobei z der Abstand von einer Kamera (18) ist, die die Bilder in der Richtung (22) aufgenommen hat, in die die Kamera (18) zeigt, x der Abstand von der Kamera (18) in der senkrechten Richtung ist und $c_1$, $c_2$ und $c_3$ zu bestimmende Koeffizienten sind.

23. Verfahren nach Anspruch 22, in dem die Güte der Anpassung an diese Kurve verwendet wird, um eine statische Sicherheit der Anpassung anzugeben.

24. Verfahren nach Anspruch 22 oder 23, in dem die Quergeschwindigkeit (32) als die Änderungsgeschwindigkeit von $c_1$ berechnet wird.

25. Verfahren nach einem der Ansprüche 22 bis 24, in dem der zweite Gierwinkel als $c_2$ im Bogenmaß berechnet wird.

26. Verfahren nach einem der Ansprüche 19 bis 25, in dem das Verfahren auch umfasst die Schritte eines:

h) Berechnens eines zweiten Gierwinkels anhand der Kurve, an die die Merkmale angepasst worden sind; und
i) Berechnens des Unterschieds zwischen den ersten und zweiten Gierwinkeln, um einen Fehlausrichtungswert (28) anzugeben, der auf die Fehlausrichtung zwischen einer zum Aufnehmen der Bilder verwendeten Kamera (18) und einem Festpunkt (20) schließen lässt.

27. Verfahren nach Anspruch 26, ferner umfassend:

j) ein Wiederholen des Verfahrens und Korrigieren des von der Kamera (18) betrachteten Bildes durch einen Betrag, der durch den Fehlausrichtungswert (28) angegeben wird.

28. Verfahren nach Anspruch 27, in dem Schritt (j) iterativ wiederholt wird, um unter Verwendung der Kamera die Genauigkeit von Messungen zu verbessern.

29. Verfahren nach Anspruch 27 oder 28, in dem Schritt (j) nur ausgeführt wird, wenn die Grundgeschwindigkeit (30) des Fahrzeugs über einem bestimmten Grenzwert liegt.

30. Verfahren nach einem der Ansprüche 27 bis 29, in dem Schritt (j) nur ausgeführt wird, wenn die statische Sicherheit der Anpassung der Merkmale an die Kurve über einem bestimmten Niveau liegt.

31. Verfahren nach einem der Ansprüche 26 bis 31, in dem der Fehlausrichtungswert als ein Winkel verwendet wird, um den die Kamera physikalisch bewegt werden sollte, um deren Ausrichtung zu verbessern.

32. Kamerasystem, das dazu geeignet ist, an einem Fahrzeug montiert zu werden, wobei das Kamerasystem zumindest eine Kamera umfasst und Mittel zum:

• Aufnehmen von zumindest zwei Bildern mit der Kamera (18) und
• Berechnen der Quergeschwindigkeit (32) des Fahrzeugs anhand der Bilder,
**dadurch gekennzeichnet, dass** ferner Mittel vorhanden sind zum:
• Berechnen der Grundgeschwindigkeit (30) des Fahrzeugs,
• Berechnen eines ersten Glerwinkels (26) des Fahrzeugs aus der Grundgeschwindigkeit (30) und der Quergeschwindigkeit (32) und
• Vergleichen des zweiten Gierwinkels mit dem ersten Gierwinkel (26), um einen Fehlausrichtungswert (28) zu erzeugen, der auf den Winkelversatz der Kamera (18) von einem Festpunkt (20) schließen lässt, um Ausrichtungsfehler nach Montage an einem Fahrzeug zu korrigieren.

33. Kamerasystem nach Anspruch 32, bei dem das System ein Fehlerangabemittel (42) aufweist, das einen Anwender zu alarmieren vermag, falls ein Fehlausrichtungswert (28) der Kamera (18) bestimmte Grenzen überschreiten oder sich in einer Geschwindigkeit ändern sollte, die bestimmte Grenzen überschreitet.

34. Kamerasystem nach Anspruch 32 oder 33, ferner aufweisend eine Steuerungseinrichtung, die dazu eingerichtet ist, mehrere Bilder der oder jeder Kamera (18) aufzunehmen, anhand der Bilder die Position von Merkmalen auf der Straße zu berechnen und anhand der Positionen der Merkmale und der Geschwindigkeit (30), mit der das Fahrzeug fährt, Gierwinkel (26) zu berechnen.

35. Kamerasystem nach Anspruch 34, umfassend eine Geschwindigkeitswahrnehmungseinrichtung (15), die mit der Steuerungseinrichtung verbunden und dazu angeordnet ist, die Geschwindigkeit (30) des Fahrzeugs wahrzunehmen.

36. Kamerasystem nach Anspruch 34 oder 35, bei dem die Steuerungseinrichtung ferner mit einem Speicher versehen ist, der die Fehlausrichtungswerte zu speichern vermag.

37. Datenträger mit Software, die auf einem Prozessor laufend bewirkt, dass der Prozessor das Verfahren nach irgendeinem der Ansprüche 1 bis 31 ausführt.

## Revendications

1. Méthode de calcul de l'angle de cap d'un véhicule en utilisant une caméra (18) associée au véhicule, la méthode comprenant l'acquisition d'au moins deux images avec la caméra (18), et **caractérisée par** le calcul de la vitesse latérale (32) du véhicule à partir des images, et le calcul de la vitesse au sol (30) du véhicule et le calcul, à partir de la vitesse au sol (30) et de la vitesse latérale (32), d'un premier angle de cap (26) du véhicule.

2. Méthode selon la revendication 1, comprenant en outre l'étape de calcul d'un deuxième angle de cap à partir des images.

3. Méthode selon la revendication 2, dans laquelle le deuxième angle de cap est comparé au premier angle de cap (26) pour produire une valeur de désalignement (28) indiquant le décalage angulaire de la caméra (18) par rapport à un point de référence (20).

4. Méthode selon la revendication 2 ou 3, dans laquelle le deuxième angle de cap est calculé sans référence à la vitesse au sol (30).

5. Méthode selon la revendication 4, dans laquelle le deuxième angle de cap est calculé uniquement à partir de caractéristiques des images.

6. Méthode selon l'une quelconque des revendications précédentes, dans laquelle le premier angle de cap (26) est calculé en calculant l'angle entre la direction de la vitesse latérale (32) et la direction de déplacement du véhicule (29).

7. Méthode selon la revendication 6, dans laquelle le premier angle de cap (26) est calculé en décomposant la vitesse au sol (30) en deux composantes perpendiculaires pour former un triangle rectangle, l'une des composantes étant la vitesse latérale (32), le premier angle de cap (26) étant l'angle dans le triangle opposé à la vitesse latérale (32).

8. Méthode selon l'une quelconque des revendications précédentes, comprenant en outre l'étape d'analyse des images pour calculer des angles de cap en trouvant des caractéristiques qui suivent la direction de déplacement du véhicule.

9. Méthode selon la revendication 8, dans laquelle la vitesse latérale (32) est calculée en mesurant la vitesse à laquelle les caractéristiques se déplacent perpendiculairement à la direction de vision (22) de la caméra (18).

10. Méthode selon la revendication 8 ou 9, dans laquelle les caractéristiques sont tracées sur une courbe sous la forme de :

$$x = c_1 + c_2 z + c_3 z^2$$

où z est la distance de la caméra (18) dans la direction (22) dans laquelle pointe la caméra, x est la distance de la caméra (18) dans la direction perpendiculaire, et $c_1$, $c_2$ et $c_3$ sont des coefficients à déterminer.

11. Méthode selon la revendication 10, dans laquelle la vitesse latérale (32) est calculée en tant que le taux de changement de $c_1$.

12. Méthode selon la revendication 10 ou 11, dans laquelle le deuxième angle de cap est calculé en tant que $c_2$.

13. Méthode selon l'une quelconque des revendications 4 à 8, comprenant en outre l'étape d'exécution d'une transformée de perspective inverse sur l'image visualisée par la caméra (18) avant de tracer les caractéristiques sur des courbes, la transformée étant donnée par :

$$x = \frac{hX}{H-Y} \quad \text{et} \quad z = \frac{fh}{H-Y}$$

où X et Y sont les coordonnées d'image référencées par rapport au centre de la ligne de l'image acquise, H indique la position de l'horizon, f est la longueur focale de la caméra (18), h est la hauteur de la caméra (18) au-dessus du sol, z est la distance de la caméra (18) dans la direction (22) dans laquelle pointe la caméra (18) et x est la distance de la caméra (18) dans la direction perpendiculaire.

14. Méthode d'amélioration de la précision d'un système de caméra associé à un véhicule, la méthode comprenant le calcul d'une valeur de désalignement (28) selon la revendication 3 ou selon l'une quelconque des revendications 4 à 13 dépendant de la revendication 3, et l'utilisation de cette valeur pour corriger le système.

15. Méthode selon la revendication 14, comprenant en outre le recalcul à répétition de la valeur de désalignement (28), le premier angle de cap (26) étant d'abord corrigé par la quantité indiquée par la valeur de désalignement (28) à chaque recalcul successif.

16. Méthode selon la revendication 15, dans laquelle la valeur de désalignement (28) calculée par chaque itération successive est filtrée par un filtre (40) de sorte que le taux de changement de la valeur de désalignement (28) est contraint d'être au-dessous d'une valeur maximale.

17. Méthode selon l'une quelconque des revendications 14 à 16, comprenant en outre l'étape d'alerte d'un utilisateur si la valeur de désalignement (28) dépasse certaines limites.

18. Méthode selon l'une quelconque des revendications 14 à 17, comprenant en outre l'étape d'alerte d'un utilisateur si la valeur de désalignement (28) change à un taux supérieur à une limite prédéfinie.

19. Méthode d'estimation de l'erreur d'un angle de cap mesuré (26) d'un véhicule se déplaçant sur une route, la route ayant des caractéristiques sur la longueur de la route, comprenant les étapes de :

   a) l'acquisition périodique d'images de la route ;
   et **caractérisée par** :
   b) l'analyse de l'image ou de chaque image pour déterminer la position des caractéristiques ;
   c) ajuster les caractéristiques à une courbe ;
   d) le calcul d'une vitesse latérale (32) de la courbe par rapport au véhicule ;
   e) la division de la vitesse latérale (32) par la vitesse au sol (30) du véhicule ;
   f) la prise du cosinus inverse de ce rapport ; et
   g) la soustraction de cet angle à 90° pour donner un premier angle de cap.

20. Méthode selon la revendication 19, dans laquelle l'étape d'analyse des caractéristiques comprend l'exécution d'une transformée de perspective inverse.

**21.** Méthode selon la revendication 20, dans laquelle la transformée est sous la forme de

$$x = \frac{hX}{H - Y} \quad \text{et} \quad z = \frac{fh}{H - Y}$$

où X et Y sont les coordonnées d'image référencées par rapport au centre de la ligne de l'image acquise, H indique la position de l'horizon, f est la longueur focale de la caméra (18) ayant acquis les images, h est la hauteur de la caméra (18) au-dessus du sol, z est la distance de la caméra (18) dans la direction (22) dans laquelle pointe la caméra (18) et x est la distance de la caméra (18) dans la direction perpendiculaire.

**22.** Méthode selon l'une quelconque des revendications 19 à 21, dans laquelle la courbe à laquelle les caractéristiques sont ajustées à l'étape (c) est une équation quadratique sous la forme de $x = c_1 + c_2 z + c_3 z^2$, où z est la distance d'une caméra (18) ayant acquis les images dans la direction (22) dans laquelle pointe la caméra (18), x est la distance de la caméra (18) dans la direction perpendiculaire, et $c_1$, $c_2$ et $c_3$ sont des coefficients à déterminer.

**23.** Méthode selon la revendication 22, dans laquelle l'exactitude d'ajustement à cette courbe est utilisée pour donner un niveau de confiance du tracé.

**24.** Méthode selon la revendication 22 ou 23, dans laquelle la vitesse latérale (32) est calculée en tant que taux de changement de $c_1$.

**25.** Méthode selon l'une quelconque des revendications 22 à 24, dans laquelle le deuxième angle de cap est calculé en tant que $c_2$ en radians.

**26.** Méthode selon l'une quelconque des revendications 19 à 25, dans laquelle la méthode comprend également les étapes de :

h) calcul d'un deuxième angle de cap à partir de la courbe à laquelle les caractéristiques ont été ajustées ; et
i) calcul de la différence entre les premier et deuxième angles de cap pour donner une valeur de désalignement (28) indiquant le désalignement entre une caméra (18) utilisée pour l'acquisition des images et un repère (20).

**27.** Méthode selon la revendication 26, comprenant en outre :

j) la répétition de la méthode, en corrigeant l'image visualisée par la caméra (18) d'une quantité indiquée par la valeur de désalignement (28).

**28.** Méthode selon la revendication 27, dans laquelle l'étape (j) est répétée par itération pour améliorer la précision des mesures en utilisant la caméra.

**29.** Méthode selon la revendication 27 ou 28, dans laquelle l'étape (j) n'est effectuée que lorsque la vitesse au sol (30) du véhicule est supérieure à une certaine limite.

**30.** Méthode selon l'une quelconque des revendications 27 à 29, dans laquelle l'étape (j) n'est effectuée que lorsque le niveau de confiance du tracé des caractéristiques sur la courbe est supérieur à un certain niveau.

**31.** Méthode selon l'une quelconque des revendications 26 à 31, dans laquelle la valeur de désalignement est utilisée en tant qu'angle duquel la caméra doit être physiquement déplacée pour améliorer son alignement.

**32.** Système de caméra apte à être monté sur un véhicule, le système de caméra comprenant au moins une caméra et des moyens pour :

- l'acquisition d'au moins deux images avec la caméra (18), et
- le calcul de la vitesse latérale (32) du véhicule à partir des images,
et **caractérisé en ce qu'**il comprend en outre des moyens pour :
- le calcul de la vitesse au sol (30) du véhicule,
- le calcul, à partir de la vitesse au sol (30) et de la vitesse latérale (32), d'un premier angle de cap (26) du véhicule, et

- la comparaison du deuxième angle de cap au premier angle de cap (26) pour produire une valeur de désalignement (28) indiquant le décalage angulaire de la caméra (18) par rapport à un repère (20), afin de corriger des erreurs d'alignement lorsqu'elle est montée sur un véhicule.

33. Système de caméra selon la revendication 32, dans lequel le système comprend un moyen d'indication de défaut (42), qui est apte à alerter un utilisateur si une valeur de désalignement (28) de la caméra (18) dépasse certaines limites ou change à un taux dépassant certaines limites.

34. Système de caméra selon la revendication 32 ou 33, comprenant en outre un moyen de commande apte à acquérir de multiples images à partir de la caméra ou de chaque caméra (18), à calculer à partir des images la position de caractéristiques sur la route, et à calculer des angles de cap (26) à partir des positions des caractéristiques et de la vitesse (30) de déplacement du véhicule.

35. Système de caméra selon la revendication 34, comprenant un moyen de détection de vitesse (15) associé au moyen de commande agencé pour détecter la vitesse (30) du véhicule.

36. Système de caméra selon la revendication 34 ou 35, dans lequel le moyen de commande est également pourvu d'une mémoire apte à stocker les valeurs de désalignement.

37. Support de données portant un logiciel qui, lorsqu'il est exécuté sur un processeur, amène le processeur à effectuer la méthode selon l'une quelconque des revendications 1 à 31.

# Fig 1

Fig2

Fig 3

```
┌──────────────┐   44            ┌──────┐         ┌──────────┐
│    Lane      │ ───────────────▶│  ÷   │ ───────▶│  cos⁻¹   │
│  Detection   │     v_lat       │      │         │          │
│  Algorithm   │                 │  32  │         │   34     │
│     30       │                 └──────┘         └──────────┘
└──────────────┘    46              ▲                  │
   ▲      │         \               │                  ▼
   │      │          \   v_wheels   │            ┌──────────┐
   │      │           \             │            │ 90° − x  │
   │      │            \      ┌──────────┐       │          │
   │      │             \     │  Speed   │       │   36     │
   │      │              \    │ sensor 15│       └──────────┘
   │      │               \   └──────────┘            │
   │      │     28                                    ▼
   │      │      \                              ┌──────────┐
   │      └───────\────────────────────────────▶│    −     │
   │               \                             │         │
   │                \        β                   │   38    │
   │                                             └──────────┘
   │                                                   │
   │                                                   ▼
   │                                             ┌──────────┐
   │                                             │  Filter  │
   │                                             │    40    │
   │       50                                    └──────────┘
   │        \                                          │
   └─────────\─────────────────────────────────────┐  │
              \                                     ▼  ▼
                 θ'                           ┌───────────────┐
                                              │     Fault     │
                                              │ detection  42 │
                                              └───────────────┘
```

**EP 1 492 999 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0952427 A

- US 5835880 A

**Non-patent literature cited in the description**

- AURORA: A Vision-Based Roadway Departure Warning System. *Intelligent Robots and Systems 95, IEEE,* August 1995, vol. 1 (5-9), 245-248